(19) Europäisches Patentamt
European Patent Office
Office européen des brevets

(11) **EP 3 703 374 A1**

(12) **EUROPEAN PATENT APPLICATION**

(43) Date of publication:
**02.09.2020   Bulletin 2020/36**

(51) Int Cl.:
***H04N 19/537*** (2014.01)      ***H04N 19/503*** (2014.01)

(21) Application number: **19191027.2**

(22) Date of filing: **09.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.08.2018   US 201862717470 P**
**29.01.2019   US 201916261441**

(71) Applicant: **Disney Enterprises, Inc.**
**Burbank, CA 91521 (US)**

(72) Inventors:
• **Schroers, Christopher**
**Burbank, CA California 91521 (US)**
• **Schaub, Simone**
**Burbank, CA California 91521 (US)**

• **Doggett, Erika**
**Burbank, CA California 91521 (US)**
• **McPhillen, Jared**
**Burbank, CA California 91521 (US)**
• **Labrozzi, Scott**
**Burbank, CA California 91521 (US)**
• **Djelouah, Abdelaziz**
**Burbank, CA California 91521 (US)**

(74) Representative: **Morrall, Jonathan Ian McLachlan**
**Kilburn & Strode LLP**
**Lacon London**
**84 Theobalds Road**
**London WC1X 8NL (GB)**

Remarks:
Claim 16 to 20 is deemed to be abandoned due to non-payment of the claims fee (Rule 45(3) EPC).

(54) **MACHINE LEARNING BASED VIDEO COMPRESSION**

(57)    Systems and methods are disclosed for compressing a target video. A computer-implemented method may use a computer system that include one or more physical computer processors and non-transient electronic storage. The computer-implemented method may include: obtaining the target video, extracting one or more frames from the target video, and generating an estimated optical flow based on a displacement of pixels between the one or more frames. The one or more frames may include one or more of a key frame and a target frame.

FIG. 1A

FIG. 1B

FIG. 1C

FIG. 1D

**Description**

The present application claims priority to U.S. Patent Application No. 62/717,470 filed on August 10, 2018, which is incorporated herein by reference in its entirety.

**TECHNICAL FIELD**

The present disclosure relates generally to video compression.

**BRIEF SUMMARY OF THE EMBODIMENTS**

Embodiments of the present disclosure include systems and methods of compressing video using machine learning. In accordance with the technology described herein, a computer-implemented method for compressing a target video is disclosed. The computer-implemented method may be implemented in a computer system that may include one or more physical computer processors and non-transient electronic storage. The computer-implemented method may include obtaining, from the non-transient electronic storage, the target video. The computer-implemented method may include extracting, with the one or more physical computer processors, one or more frames from the target video. The one or more frames may include one or more of a key frame and a target frame. The computer-implemented method may also include generating, with the one or more physical computer processors, an estimated optical flow based on a displacement of pixels between the one or more frames.

In embodiments, the displacement of pixels may be between a key frame and/or the target frame.

In embodiments, the computer-implemented method may further include applying, with the one or more physical computer processors, the estimated optical flow to a trained optical flow model to generate a refined optical flow. The trained optical flow model may have been trained by using optical flow training data. The optical flow training data may include (i) optical flow data, (ii) a corresponding residual, (iii) a corresponding warped frame, and/or (iv) a corresponding target frame.

In embodiments, the computer-implemented method may further include generating, with the one or more physical computer processors, a warped target frame by applying the estimated optical flow to the key frame. The warped target frame may include a missing element not visible in the key frame. The computer-implemented method may also include identifying, with the one or more physical computer processors, the missing element in the warped target frame using supplemental information. The computer-implemented method may include synthesizing, with the one or more physical computer processors, the missing element from the warped target frame by applying the warped target frame to a trained interpolation model. The trained interpolation model may have been trained using interpolation training data. The interpolation training data may include (i) a user-defined value and/or (ii) multiple sets of frames. A given set of frames may include a previous training frame, a target training frame, and/or a subsequent training frame. The computer-implemented method may also include generating, with the one or more physical computer processors, a synthesized target frame.

In embodiments, the supplemental information may include one or more of a mask, the target frame, a given magnitude of a given estimated optical flow for a given object in the warped target frame, and/or a depth corresponding to the missing element.

In embodiments, identifying the missing element may include, based on the given magnitude of the given estimated optical flow of the given object, identifying, with the one or more physical computer processors, the given object as a foreground object when the magnitude reaches a threshold value. Identifying the missing element may also include identifying, with the one or more physical computer processors, the missing element in a background of the warped target frame using the displacement of the foreground object between the one or more frames.

In embodiments, identifying the missing element may include, based on a change of depth of an object between the one or more frames, identifying, with the one or more physical computer processors, the missing element using the estimated optical flow. Identifying the missing element may also include generating, with the one or more physical computer processors, an element to apply to the missing element. Identifying the missing element may include generating, with the one or more physical computer processors, a synthesized target frame.

In embodiments, the trained optical flow model and/or the trained interpolation model may include a convolutional neural network.

In embodiments, the computer-implemented method may further include encoding, with the one or more physical computer processors, the synthesized target frame. The computer-implemented method may include encoding, with the one or more physical computer processors, side information based on the encoded synthesized target frame. The side information may include one or more of the optical flow and/or a mask.

In accordance with additional aspects of the present disclosure, a system may include non-transient electronic storage and one or more physical computer processors. The one or more physical computer processors may be configured by machine-readable instructions to perform a number of operations. One operation may be to obtain, from the non-transient electronic storage, the target video. Another operation may be to extract, with the one or more physical computer processors, one or more frames from the target video. The one or more frames may include one or more of a key frame and/or a target frame. Yet another operation may be to generate, with the one or more physical computer processors, an estimated optical flow based on a displacement of pixels between the one or more frames.

In embodiments, another operation may be to apply, with the one or more physical computer processors, the estimated optical flow to a trained optical flow model to generate a refined optical flow. The trained optical flow model may have been trained by using optical flow training data. The optical flow training data may include (i) optical flow data, (ii) a corresponding residual, (iii) a corresponding warped frame, and/or (iv) a corresponding target frame.

In embodiments, another such operation is to generate, with the one or more physical computer processors, a warped target frame by applying the estimated optical flow to the key frame. The warped target frame may include a missing element not visible in the key frame. Yet another such operation is to identify, with the one or more physical computer processors, the missing element in the warped target frame using supplemental information. Another operation is to synthesize, with the one or more physical computer processors, the missing element from the warped target frame by applying the warped target frame to a trained interpolation model. The trained interpolation model may have been trained using interpolation training data. The interpolation training data may include (i) a user-defined value and (ii) multiple sets of frames. A given set of frames may include a previous training frame, a target training frame, and/or a subsequent training frame. Another operation is to generate, with the one or more physical computer processors, a synthesized target frame.

In embodiments, the supplemental information may include one or more of a mask, the target frame, a given magnitude of a given estimated optical flow for a given object in the warped target frame, and/or a depth corresponding to the missing element.

In embodiments, identifying the missing element may include based on the given magnitude of the given estimated optical flow of the given object, identifying, with the one or more physical computer processors, the given object as a foreground object when the magnitude reaches a threshold value. Identifying the missing element may also include identifying, with the one or more physical computer processors, the missing element in a background of the warped target frame using the displacement of the foreground object between the one or more frames.

In embodiments, identifying the missing element may include based on a change of depth of an object between the one or more frames, identifying, with the one or more physical computer processors, the missing element using the estimated optical flow. Identifying the missing element may also include generating, with the one or more physical computer processors, an element to apply to the missing element. Identifying the missing element may include generating, with the one or more physical computer processors, a synthesized target frame.

In embodiments, the trained optical flow model and/or the trained interpolation model may include a convolutional neural network.

In embodiments, the operation may include encoding, with the one or more physical computer processors, the synthesized target frame. In embodiments, the operation may also include encoding, with the one or more physical computer processors, side information based on the encoded synthesized target frame. The side information may include one or more of the optical flow and/or a mask.

In embodiments, the key frame may include one or more of a previous frame and/or a subsequent frame.

In embodiments, generating the estimated optical flow may include using, with the one or more physical computer processors, the previous frame and the target frame.

In accordance with additional aspects of the present disclosure, a non-transitory computer-readable medium may have executable instructions stored thereon that, when executed by one or more physical computer processors, cause the one or more physical computer processors to perform a number of operations. One operation may be to obtain, from the non-transient electronic storage, the target video. Another operation may be to extract, with the one or more physical computer processors, one or more frames from the target video. The one or more frames may include one or more of a key frame and a target frame. Yet another operation may be to generate, with the one or more physical computer processors, an estimated optical flow based on a displacement of pixels between the one or more frames

## BRIEF DESCRIPTION OF THE DRAWINGS

Aspects of the present disclosure will be appreciated upon review of the detailed description of the various disclosed embodiments, described below, when taken in conjunction with the accompanying figures.

FIG. 1A illustrates an example method for encoding and compressing video in accordance with embodiments disclosed herein.

FIG. 1B illustrates an example method for encoding and compressing video in accordance with embodiments disclosed herein.

FIG. 1C illustrates an example method for encoding and compressing video in accordance with embodiments disclosed herein.

FIG. 1D illustrates an example method for encoding and compressing video in accordance with embodiments disclosed herein.

FIG. 2 illustrates an example method for flow prediction in accordance with embodiments disclosed herein.

FIG. 3A illustrates an example method for forward image warping in accordance with embodiments disclosed herein.

FIG. 3B illustrates an example method for handling occlusions in accordance with embodiments disclosed herein.

FIG. 4 illustrates an example method for frame synthesis for video compression in accordance with embodiments disclosed herein.

FIG. 5 illustrates an example method for video compression in accordance with embodiments disclosed herein.

FIG. 6 illustrates an example method for encoding interpolated frames in accordance with embodiments disclosed herein.

FIG. 7 illustrates an example method for guided compression for side information in accordance with embodiments disclosed herein.

FIG. 8 illustrates an example convolutional neural network architecture in accordance with embodiments disclosed herein.

FIG. 9 illustrates an example method for joint compression of the optical flow and image compression, in accordance with embodiments disclosed herein.

FIG. 10 illustrates an example computing module that may be used to implement features of various embodiments of the disclosure.

The figures are described in greater detail in the description and examples below are provided for purposes of illustration only, and merely depict typical or example embodiments of the disclosure. The figures are not intended to be exhaustive or to limit the disclosure to the precise form disclosed. It should also be understood that the disclosure may be practiced with modification or alteration, and that the disclosure may be limited only by the claims and the equivalents thereof.

## DETAILED DESCRIPTION

The present disclosure relates to systems and methods for machine learning based video compression. For example, neural autoencoders have been applied to single image compression applications, but video compression using machine learning (i.e., deep learning) has only focused on frame interpolation and its application to video compression.

Embodiments disclosed herein are directed towards frame synthesis methods that include interpolation and extrapolation with multiple warping approaches, compression schemes that use intermediate frame interpolation results and/or compression schemes that employ correlation between images and related information, such as optical flow.

Video codecs used for video compression generally decompose video into a set of key frames encoded as single images, and a set of frames for which interpolation is used. In contrast, the present disclosure applies deep learning (e.g., neural networks) to encode, compress, and decode video. For example, the disclosed method may include interpolating frames using deep learning and applying various frame warping methods to correct image occlusions and/or other artifacts from using the optical flow. The method may use the deep learning algorithm to predict the interpolation result. Embodiments disclosed here may further apply forward warping to the interpolation to correlate flow maps and images for improved compression. In some embodiments, a video compression scheme may predict a current frame by encoding already available video frames, e.g., the current frame and one or more reference frames. This is comparable to video frame interpolation and extrapolation, with the difference that the predicted image is available at encoding time.

Example video compression schemes may include motion estimation, image synthesis, and data encoding, as will be described herein.

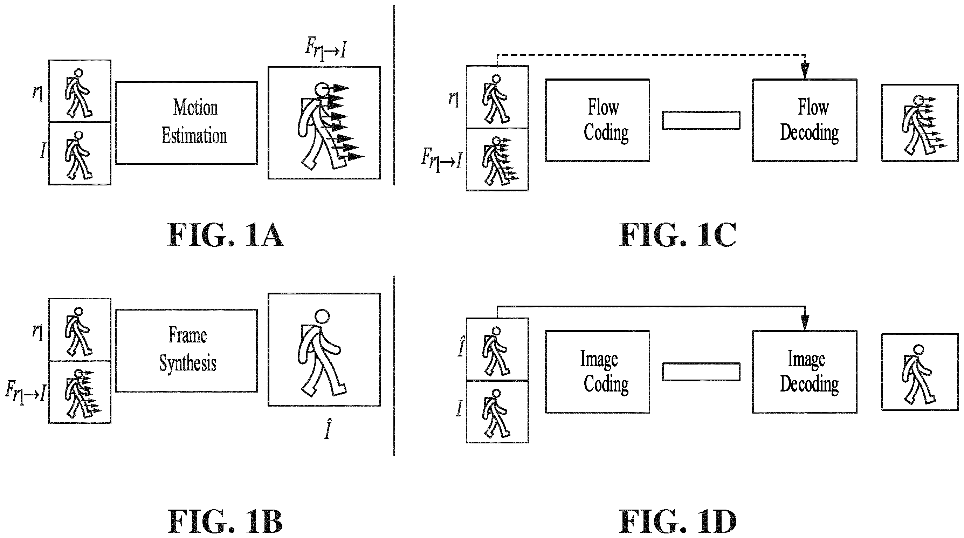

FIGs. 1A, 1B, 1C,and 1D illustrate an example method for encoding and compressing video. Assuming some reference frame $r_1$ is available, using motion it is possible to efficiently encode a frame $I$ (e.g., adjacent, within five frames, and/or other numbers of frames) by: computing a 2d displacement map $F_{r1}$ (e.g., FIG. 1A), using motion field and reference frame, synthesizing an estimate $\hat{I}$ of the image to encode (e.g., FIG. 1B), encoding and transmitting the motion field-depending on the chosen encoding/decoding scheme, the frame $r_1$ might be available at decoding time (e.g., FIG. 1C), and encoding $I$ takes into account the synthesis result $\hat{I}$ which is used as supplementary input (e.g., FIG. ID). In some examples, a residual to $\hat{I}$ is explicitly encoded. The residual may be the difference between $I$ and $\hat{I}$. For reference frames, image and flow coding/decoding may be accomplished with a single network as there is correlation between flow and image content. For example, the single network may receive one or more inputs (e.g., optical flow, images, video, residuals, supplemental information, etc.) and outputs information used in a decoder network to produce playable content.

In some embodiments, using available reference frames $\{r_i \,|\, i \in 1...n\}$ (usually $n = 2$), a new frame, or target frame, $I$, may be encoded. The reference frames may be selected to have some overlap with the content of $I$. Motion vector maps, or optical flow, may be estimated between the reference frames and the target frame. For example, a motion vector map may correspond to a 2d displacement of pixels from $r_i$ to $I$.

Frame synthesis may use the estimated optical flow to forward warp (e.g., from an earlier frame of the video to a later frame of the video) the reference frames $r_i$ and compute a prediction of the image to encode. The forward mapped image may be $W_{r_i \to I}$ denoted by and the prediction by $\hat{I}$. Using forward mapping may help identify image regions of $I$ that are not present in the reference frame, or are otherwise occluded, indicating image regions where the machine learning algorithm may synthesize missing pixels. In the case of prediction from several reference frames, this also helps select which reference frame to use. A network, using machine learning (e.g., a convolutional neural network (CNN)), may select the reference frame with the smallest corresponding residual value or may select multiple frames to improve the predicted image, etc. It should be appreciated that other heuristics may be used to select the reference frame. In embodiments, these heuristics may be based on the residual. In addition to this, working with forward displacement maps allows the usage of the available reference frames $r_i$ for encoding and decoding. In some examples, the machine learning algorithm is a CNN.

Two types of frames may be used at encoding time: (1) the key frames, which rely entirely on single image compression, and (2) interpolated frames, which are the result of image synthesis. Encoding interpolated frames is more efficient because it takes advantage of the intermediate synthesis result $\hat{I}$. Any frame that is used as a reference frame must also encode the displacement map, from $r_1$ to $I$, $F_{r1-->I}$. $F_{r1-->I}$ may be correlated to $r_i$.

**Optical Flow**

Methods for estimating optical flow are disclosed herein. In some embodiments, for each reference frame $r_i$, the 2d displacement for each pixel location may be predicted to match pixels from $I$.

A ground truth displacement map may be used to estimate optical flow. In this case, optical flow may be computed at encoding time, between the reference frame $r_i$ and the frame to encode $I$. This optical flow estimate may be encoded and transferred as part of the video data. In this example, the decoder only decodes the data to obtain the displacement map.

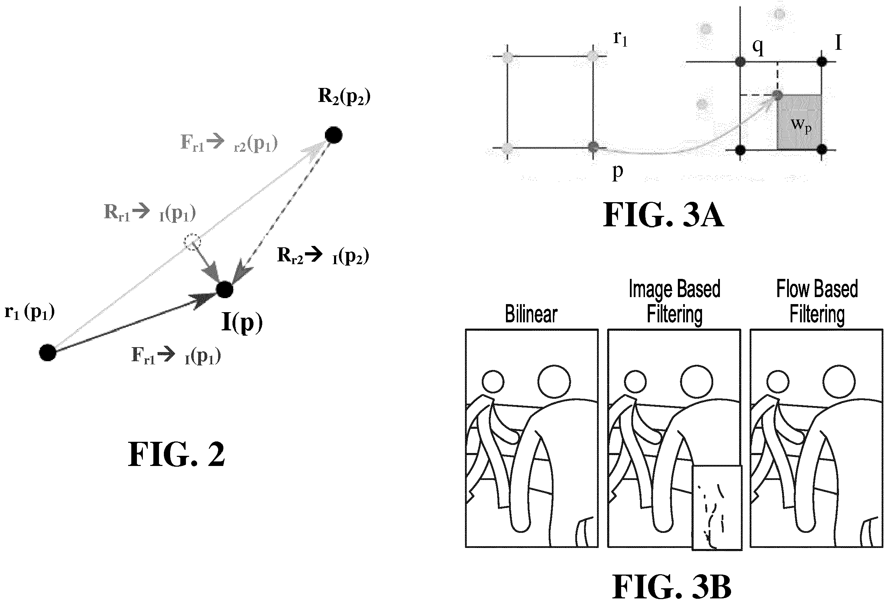

FIG. 2 illustrates a predicted displacement map that may be used to estimate optical flow using several reference frames. The pixels $p_1$, $p_2$, and $p$, may correspond to frames $r_1$, $r_2$ and $I$ respectively. The optical flow vector $F_{r1-->I(p1)}$ can be predicted from the available reference frames $r_1$ and $r_2$. Residual motion may be needed to correct the prediction as illustrated in FIG. 2. In embodiments, $F_{r1-->r2}$ and $F_{r1-->I(p1)}$ can be used to infer $F_{r1-->I(p2)}$.

In some embodiments, the reference frames $r_1$ and $r_2$ are respectively situated before and after I. Assuming linear motion, optical flow can be estimated as:

$$F_{r_1 \to I} = 0.5 * F_{r_1 \to r_2} + R_{r_1 \to I} \quad (1)$$

Where term $R_{r1 \to I}$ is the residual to be encoded, correcting errors in the optical flow or if the linear motion assumption is not respected. This scheme may increase decoding time but reduce the amount of data to be transferred.

Some example embodiments include predicting multiple displacement maps. When predicting multiple displacement maps, the correlation between displacement maps may be used for better flow prediction and to reduce the size of the residual information needed. This is illustrated in FIG. 2. It is possible to use the different displacement maps related to $r_1$ for predicting motion in the opposite direction $F_{r2-->I}$. For example, displacement map may be inverted $F_{r1-->r2}$ and/or computed using one or more reference frames, scale the inverted displacement map by a value, such as, for example, 0.5, and add the residual, $R_{r1 \to I}$. It should be appreciated that other techniques may be used to predict motion in the opposite direction.

**Frame Synthesis**

Some examples of frame prediction include estimating a prediction from a single image. In the case where a single reference frame $r_1$ is available, the motion field $F_{r1 \to I}$ may be used to forward warp the reference frame and obtain an initial estimate $W_{r1 \to I}$. The resulting image may contain holes in regions occluded or not visible in $r_1$. Using machine learning (e.g., a convolutional neural network), the missing parts may be synthesized and used to compute an approximation of $I_1$:

$$\hat{I} = F_s(W_{r_1 \to I}; \Lambda_s) \qquad (2)$$

Some example embodiments include a method for predicting residual motion from multiple images. Video compression may involve synthesis from a single frame using larger time intervals. These images may then be used for predicting in-between short-range frames. The proposed synthesis algorithm can take an optional supplementary input when available. Embodiments of the present disclosure include warping one or more reference frames using optical flow and providing the warping results as input for synthesis.

$$\hat{I} = F_s\big(W_{r_1 \to I}, \ldots, W_{r_n \to I}; \Lambda_s\big) \qquad (3)$$

**Image Warping**

In some embodiments, before using machine learning (e.g., a convolutional neural network) to synthesize the frame $\hat{I}$, the reference image may be warped using the estimated optical flow.

FIGs. 3A and 3B illustrate methods for warping the reference image. Referring to FIG. 3A, a method for warping a reference image may include: (a) using the optical flow to warp pixel $p$ from a reference frame $r_1$ to a new position in $\hat{I}$, (pixel, $p$, may contribute to the color of pixel $q$, with weight $w_p$ corresponding to bilinear interpolation; (b) to address artifacts from direct bilinear weighting, a ground truth displacement, or image-based filtering process, and/or other process, may be applied, but may require an additional binary mask applied to occluded regions. In some embodiments, a flow-based filtering process may be applied to address occlusions and/or artifacts without the need to transfer additional data.

In some embodiments, a forward approach may be used. For example, a pixel $p$ from the reference frame, $r_1$, will contribute to 4 pixel locations around its end position in $\hat{I}$. In embodiments, for a pixel location $q$, the resulting color is

$$I(q) = \sum_{p \in S_q} \frac{w_p}{W_q} r_1(p) \ \ with \ W_q = \sum_{p \in S_q} w_p \qquad (4)$$

$S_q$ is the set of pixels from $r_1$ contributing to location $q$ with weight $\omega_p$. Bilinear weights may be used as illustrated in FIG. 3A. Regions corresponding to dis-occlusion in $\hat{I}$ will not receive any color from the reference image and they will be identified as regions the synthesis network has to inpaint.

If an occlusion occurs between $r_1$ and $I$, using all pixels as in the contributing sets $S_q$ will create ghosting artifacts (see FIG. 3B). The following methods may be used to reduce these ghosting artifacts and create the set $S_q$. In the following, $A_q$ may represent the set of all pixels from $r_1$ with end destinations near pixel $q$. Near may include within 10 pixels, 50 pixels, 100 pixels, etc.

In some examples, filling in occlusions may be estimated from the image. Contrary to frame interpolation, during video coding, ground truth colors of destination pixels are available and can be used to build the $S_q$. The first element is the pixel $p^*$ defined as:

$$p^* = \arg \min_{p \in A_q} \| I(q) - r_1(p) \| \qquad (5)$$

From this, $S_q$ is defined as the set of pixels $p \in A_q$ satisfying:

$$\|I(q) - r_1(p)\| < \|I(q)0r_1(p^*)\| + \epsilon \quad (6)$$

In embodiments sets, $S_q$, need not be explicitly built. Instead, pixels $p$ that are not used may be marked and ignored in the warping. A morphological operation may be used to smooth the resulting mask around the occlusion by consecutively applying opening and closing with a kernel size of about 5 pixels. It should be appreciated that other processes may be applied to smooth the mask. At decoding time the, same warping approach may be used, but the mask may be transmitted with optical flow.

In some examples, locations and colors of occlusions may be estimated from displacement. The previous solution requires the use of a supplementary mask which is also encoded. In the present approach, the magnitude of the optical flow may be used to resolve occlusions. For example, a large motion is more likely to correspond to foreground objects. In this case, the first element is the pixel $p^*$ defined as:

$$p^* = \arg \min_{p \in A_q} \|F_{r_1 \rightarrow I}(q)\| \quad (7)$$

$S_q$ is defined as the set of pixels $p \in A_q$ satisfying:

$$\|F_{r_1 \rightarrow I}(p) - F_{r_1 \rightarrow I}(p^*)\| < \epsilon \quad (8)$$

Where $\epsilon$ may represent a user-defined threshold (e.g., based on the statistics of background motion). In embodiments, additional filtering may be used.

In some examples, occlusion may be estimated from depth. Depth ordering may be estimated with a machine learning process (e.g., a convolutional neural network). For example, a depth map network may estimate depth maps from an image or one or more monocular image sequences. Training data for the depth map network may include image sequences, depth maps, stereo image sequences, monocular sequences, and/or other content. After training an initial depth map network using the training data, a trained depth map network may receive content and estimate a depth map for the content and estimate occlusions based on the depth maps. Occluded pixels are identified with a depth test and simply ignored during warping. With sufficient computation power, more precise depth information can also be obtained using multi-view geometry techniques.

The warping techniques described herein are complementary and can be combined in different ways. For example, displacement and depth may be correlated. Many of the computations may be shared between the two modalities and obtaining depth represents a relatively minor increment in computation time. Occlusion may be estimated from the ground truth image. Deciding if the warping mask should be used may be based on the encoding cost comparison between the mask and the image residual after synthesis. In embodiments, these may be user selected based on the given application.

## Synthesis Network

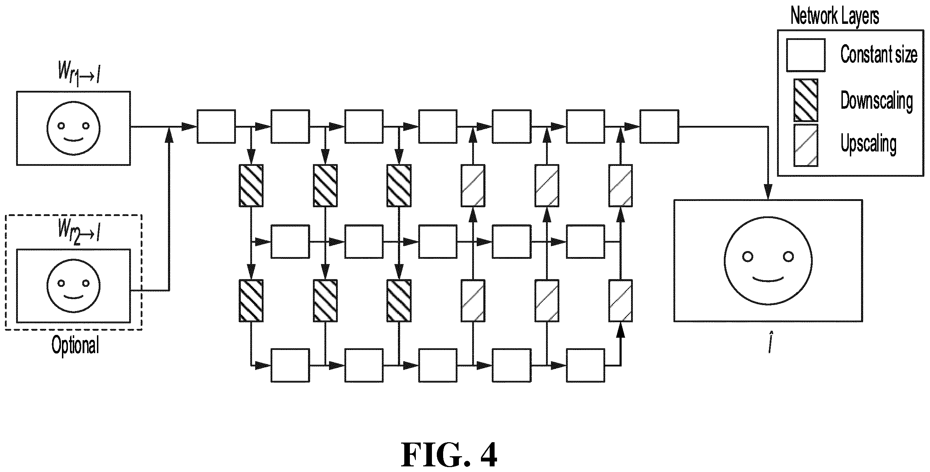

FIG. 4 illustrates an example synthesis network. Referring to FIG. 4, to synthesize the frame $\hat{I}$, the reference frame $r_1$ may be warped using the optical flow map $F_{Ir1 \rightarrow I.}$. The resulting image $W_{r1 \rightarrow I}$ may be processed by the frame synthesis network to predict the image $\hat{I}$. When more than one reference frame $r_2$ is available, a forward mapped image $W_{r2 \rightarrow I}$ may be calculated and provided as a supplementary channel to the synthesis network. The network architecture may, for example, be a GridNet network, and/or other network types.

Still referring to FIG. 4, the network may take as input the concatenation of the warped reference frames. The training data may be multiple videos. The warped video frames may include holes and/or other occlusions. More inputs may be provided to the network, such as backward warped reference frames and/or warped feature maps.

Training depends on the application case. For example, for interpolation from two reference frames $r_1$ and $r_2$, the network may be trained to minimize the objective function L over the dataset $D$ consisting of triplets of input images $(r_1, r_2)$ and the corresponding ground truth interpolation frame, $I$:

$$\Lambda_s^* = \arg \min_{\Lambda_s} \mathbb{E}_{r_1, r_2, I \sim D} \left[ \mathcal{L}\left(F_s\left(W_{r_1 \rightarrow I}, W_{r_2 \rightarrow I}; \Lambda_s\right), I\right) \right] \quad (9)$$

For the loss, C, we use the $\ell_1$-norm of pixel differences which may lead to sharper results than $\ell_2$.

$$\mathcal{L}(\hat{I}, I) = \|I - \hat{I}\|_1 \quad (10)$$

**Compression**

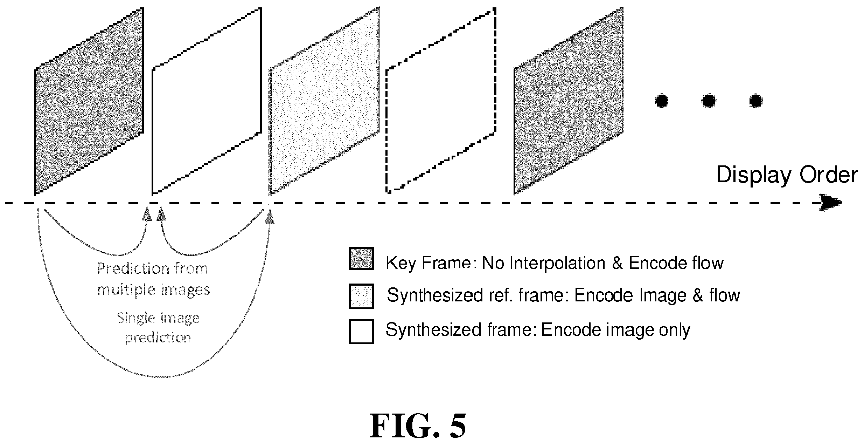

FIG. 5 illustrates a video compression method. For example, a set of key frames may be defined. These key frames may be encoded using single image compression. For intermediate frames, encoding may take advantage of the intermediate synthesized result. Any frame used as reference for interpolation may also encode optical flow.

In some embodiments, image compression may be implemented through a compression network. In the following, $C$ and $D$ denote compression and decoding functions, respectively.

In some embodiments, key frames, which are not interpolated, may be compressed using a single image compression method (see FIG. 5). Key frames may be selected based on a selected interval spacing or a selection algorithm based on motion and scene content. Key frame compression may be implemented using the architecture and training loss described below:

$$\mathcal{L}(I, I') = R(I, I') = \gamma \varepsilon(\tilde{y}) \quad (11)$$

with $\tilde{y} = C(I)$ and $I' = D(\tilde{y})$. The total loss takes into account the reconstruction loss $R(I, I')$ and the rate loss entropy $\varepsilon(\tilde{y})$. In some embodiments, example video compression techniques may be described in greater detail in US Patent Application No. 16/254,475, which is incorporated by reference in its entirety herein.

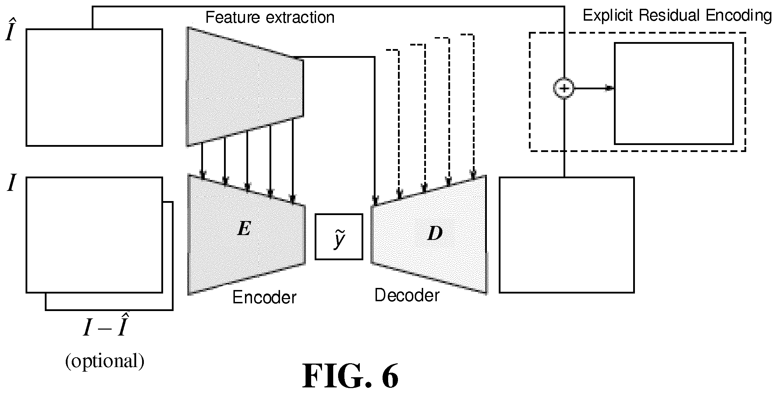

FIG. 6 illustrates a method for encoding interpolated frames. Encoding predicted frames may take advantage of the prediction $\hat{I}$ which is available both at encoding and decoding time. Multiple options are possible to encode the interpolated frames, e.g., decoding the image $I$ or a residual to be added to the prediction $\hat{I}$.

In some examples, for predicted frames, the compression process may include multiple steps, e.g., interpolation and image coding, to make the process more efficient.

In one example, the residual information may be explicitly encoded to the interpolation result or letting the network learn a better scheme. Training data for the network may be multiple videos. Training may include, for example, using a warped frame and generating multiple predictions of the warped frame. Residuals may be generated based on differences between the multiple predictions and the original frame. The residuals may be used to train the network to improve itself. In embodiments, the network may include a variational autoencoder including one or more convolutions, downscaling operation, upscaling operations, and/or other processes. It should be appreciated that other components may be used instead of, or in addition to, the network. In both cases, the network as illustrated in FIG. 6 may be used. In addition to encoder/decoder architecture from [reference to DIS 295], we also extract features from $\hat{I}$ which may be added as extra channels for the encoder. Encoder and feature extraction layers may follow the same architecture, but different weights can be used for each component.

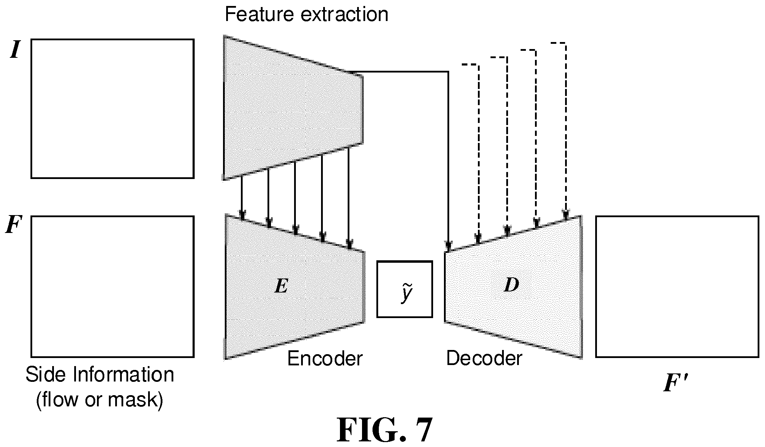

FIG. 7 illustrates a method of performing image compression guided by side information. For example, the presently disclosed compression may take the advantage of the correlation between the images and the side information (e.g., flow and masks). The image (when available) may be used to guide encoding and decoding. In some examples, a video compression method may use forward optical flow and forward warping to take advantage of the correlation between the side information and image content. For example, an image may be encoded and decoded separately, and the encoding and decoding may be guided by optical flow and binary masks, as illustrated in FIG. 7.

In some embodiments, the image and the side information may be encoded at the same time. In this case, image colors and side information may be concatenated along channels and the compression network may predict the same number of channels.

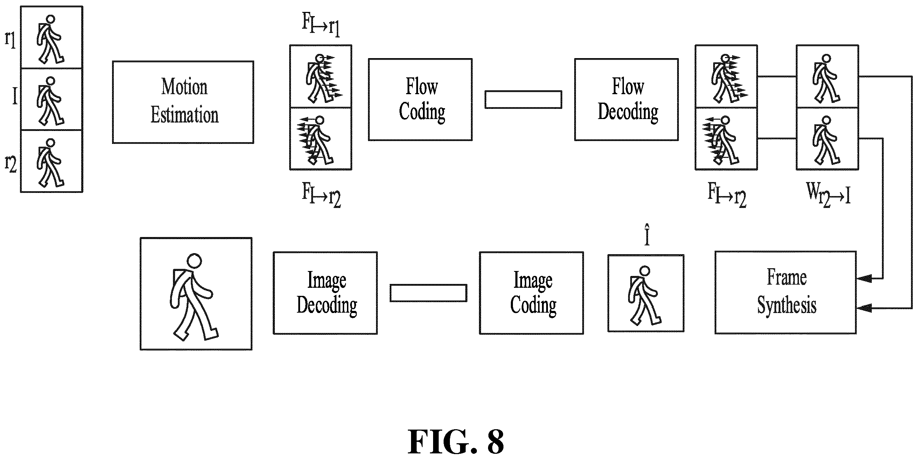

In one embodiment, optical flow and image compression may be combined in one forward pass, as illustrated in FIG. 8. In some embodiments, the image residual may be compressed as well. Combining multiple features in a compression step may provide a method that can be trained end to end. As illustrated in FIG. 8, the optical flow may be estimated between frame $I$ and two reference frames $r_1$ and $r_2$. The resulting flow maps $F_{I \to r_1}$ and $F_{I \to r_2}$ may be encoded. In embodiments, the flow encoder can take as supplementary input the warped frames $W_{r_1 \to I}$, $W_{r_2 \to I}$ and the image $I$. The network may identify regions where optical flow is not as accurate (e.g., above a certain threshold) and where better compression can be achieved without loss in quality. In embodiments, backward warping may be used. Referring back to FIG. 8, the optical flow may be decoded. The frame synthesis network may be used to compute $\hat{I}$, a prediction for the image, $I$. In embodiments, residual information may be encoded to the interpolation result. In some embodiments, the network may be trained to learn a better scheme, as described herein. In embodiments, synthesis and compression can be grouped into a single step.

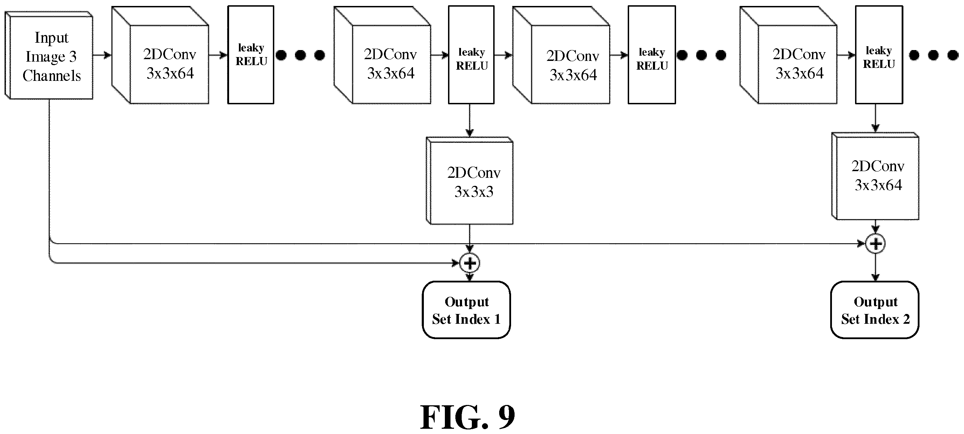

Some embodiments of the present disclosure may be implemented using a convolutional neural network as illustrated in FIG. 9. As illustrated in FIG. 9, the architecture of an example Progressive Artifact Removal Network is depicted. DConv 3x3x64 refers to a 2D convolution with kernel size 3x3 and 64 output channels. The number of input channels is given from the previous layer. Output Set Index is the output for different distortion quality levels as described herein. There are skip connections from the input to all outputs and simple convolutional layers in between. Other types of convolutional networks and/or deep learning / machine learning methodologies may be used.

As used herein, the term component might describe a given unit of functionality that can be performed in accordance with one or more embodiments of the technology disclosed herein. As used herein, a component might be implemented utilizing any form of hardware, software, or a combination thereof. For example, one or more processors, controllers, ASICs, PLAs, PALs, CPLDs, FPGAs, logical components, software routines or other mechanisms might be implemented to make up a component. In implementation, the various components described herein might be implemented as discrete components or the functions and features described can be shared in part or in total among one or more components. In other words, as would be apparent to one of ordinary skill in the art after reading this description, the various features and functionality described herein may be implemented in any given application and can be implemented in one or more separate or shared components in various combinations and permutations. As used herein, the term engine may describe a collection of components configured to perform one or more specific tasks. Even though various features or elements of functionality may be individually described or claimed as separate components or engines, one of ordinary skill in the art will understand that these features and functionality can be shared among one or more common software and hardware elements, and such description shall not require or imply that separate hardware or software components are used to implement such features or functionality.

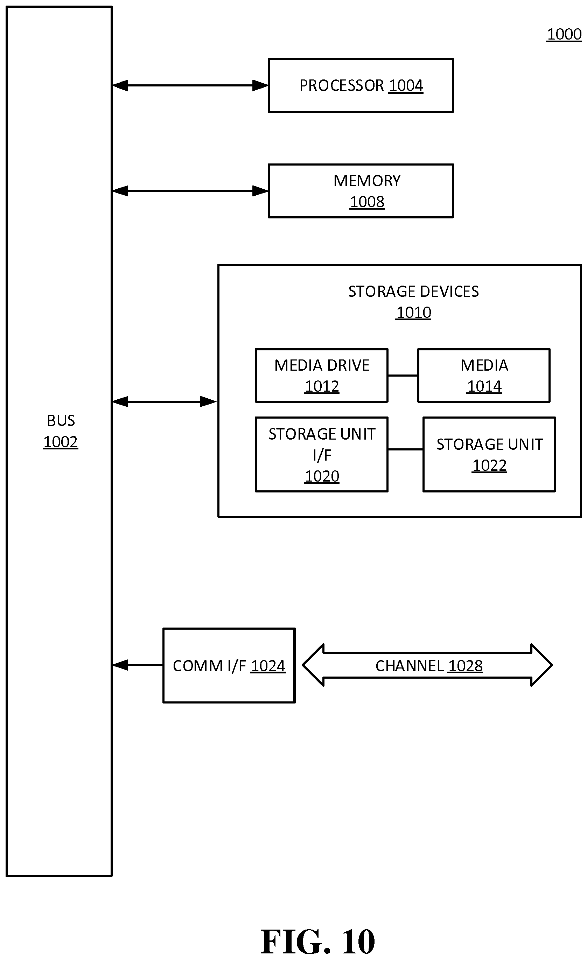

Where engines, components, or components of the technology are implemented in whole or in part using software, in one embodiment, these software elements can be implemented to operate with a computing or processing component capable of carrying out the functionality described with respect thereto. One such example computing component is shown in FIG. 10. Various embodiments are described in terms of this example-computing component 1000. After reading this description, it will become apparent to a person skilled in the relevant art how to implement the technology using other computing components or architectures.

Referring now to FIG. 10, computing component 1000 may represent, for example, computing or processing capabilities found within desktop, laptop and notebook computers; hand-held computing devices (PDA's, smart phones, cellphones, palmtops, etc.); mainframes, supercomputers, workstations or servers; or any other type of special-purpose or general-purpose computing devices as may be desirable or appropriate for a given application or environment. Computing component 1000 might also represent computing capabilities embedded within or otherwise available to a given device. For example, a computing component might be found in other electronic devices such as, for example, digital cameras, navigation systems, cellular telephones, portable computing devices, modems, routers, WAPs, terminals, and other electronic devices that might include some form of processing capability.

Computing component 1000 might include, for example, one or more processors, controllers, control components, or other processing devices, such as a processor 1004. Processor 1004 might be implemented using a general-purpose or special-purpose processing engine such as, for example, a microprocessor, controller, or other control logic. In the illustrated example, processor 1004 is connected to a bus 1002, although any communication medium can be used to facilitate interaction with other components of computing component 1000 or to communicate externally.

Computing component 1000 might also include one or more memory components, simply referred to herein as main memory 1008. For example, preferably random access memory (RAM) or other dynamic memory might be used for storing information and instructions to be executed by processor 1004. Main memory 1008 might also be used for storing temporary variables or other intermediate information during execution of instructions to be executed by processor 1004. Computing component 1000 might likewise include a read only memory ("ROM") or other static storage device coupled to bus 1002 for storing static information and instructions for processor 1004.

The computing component 1000 might also include one or more various forms of information storage device 1010, which might include, for example, a media drive 1012 and a storage unit interface 1020. The media drive 1012 might include a drive or other mechanism to support fixed or removable storage media 1014. For example, a hard disk drive, a floppy disk drive, a magnetic tape drive, an optical disk drive, a CD or DVD drive (R or RW), or other removable or fixed media drive might be provided. Accordingly, storage media 1014 might include, for example, a hard disk, a floppy disk, magnetic tape, cartridge, optical disk, a CD or DVD, or other fixed or removable medium that is read by, written to, or accessed by media drive 1012. As these examples illustrate, the storage media 1014 can include a computer usable storage medium having stored therein computer software or data.

In alternative embodiments, information storage mechanism 1010 might include other similar instrumentalities for allowing computer programs or other instructions or data to be loaded into computing component 1000. Such instrumentalities might include, for example, a fixed or removable storage unit 1022 and an interface 1020. Examples of such storage units 1022 and interfaces 1020 can include a program cartridge and cartridge interface, a removable memory (for example, a flash memory or other removable memory component) and memory slot, a PCMCIA slot and card, and other fixed or removable storage units 1022 and interfaces 1020 that allow software and data to be transferred from the storage unit 1022 to computing component 1000.

Computing component 1000 might also include a communications interface 1024. Communications interface 1024 might be used to allow software and data to be transferred between computing component 1000 and external devices. Examples of communications interface 1024 might include a modem or softmodem, a network interface (such as an Ethernet, network interface card, WiMedia, IEEE 802.XX, or other interface), a communications port (such as for example, a USB port, IR port, RS232 port, Bluetooth® interface, or other port), or other communications interface. Software and data transferred via communications interface 1024 might typically be carried on signals, which can be electronic, electromagnetic (which includes optical) or other signals capable of being exchanged by a given communications interface 1024. These signals might be provided to communications interface 1024 via a channel 1028. This channel 1028 might carry signals and might be implemented using a wired or wireless communication medium. Some examples of a channel might include a phone line, a cellular link, an RF link, an optical link, a network interface, a local or wide area network, and other wired or wireless communications channels.

In this document, the terms "computer program medium" and "computer usable medium" are used to generally refer to media such as, for example, memory 1008, storage unit 1020, media 1014, and channel 1028. These and other various forms of computer program media or computer usable media may be involved in carrying one or more sequences of one or more instructions to a processing device for execution. Such instructions embodied on the medium, are generally referred to as "computer program code" or a "computer program product" (which may be grouped in the form of computer programs or other groupings). When executed, such instructions might enable the computing component 1000 to perform features or functions of the disclosed technology as discussed herein.

While various embodiments of the disclosed technology have been described above, it should be understood that they have been presented by way of example only, and not of limitation. Likewise, the various diagrams may depict an example architectural or other configuration for the disclosed technology, which is done to aid in understanding the features and functionality that can be included in the disclosed technology. The disclosed technology is not restricted to the illustrated example architectures or configurations, but the desired features can be implemented using a variety of alternative architectures and configurations. Indeed, it will be apparent to one of skill in the art how alternative functional, logical or physical partitioning and configurations can be implemented to implement the desired features of the technology disclosed herein. Also, a multitude of different constituent component names other than those depicted herein can be applied to the various partitions. Additionally, with regard to flow diagrams, operational descriptions and method claims, the order in which the steps are presented herein shall not mandate that various embodiments be implemented to perform the recited functionality in the same order unless the context dictates otherwise.

Although the disclosed technology is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations, to one or more of the other embodiments of the disclosed technology, whether or not such embodiments are described and whether or not such features are presented as being a part of a described embodiment. Thus, the breadth and scope of the technology disclosed herein should not be limited by any of the above-described exemplary embodiments.

Terms and phrases used in this document, and variations thereof, unless otherwise expressly stated, should be construed as open ended as opposed to limiting. As examples of the foregoing: the term "including" should be read as meaning "including, without limitation" or the like; the term "example" is used to provide exemplary instances of the item in discussion, not an exhaustive or limiting list thereof; the terms "a" or "an" should be read as meaning "at least one," "one or more" or the like; and adjectives such as "conventional," "traditional," "normal," "standard," "known" and terms of similar meaning should not be construed as limiting the item described to a given time period or to an item available as of a given time, but instead should be read to encompass conventional, traditional, normal, or standard technologies that may be available or known now or at any time in the future. Likewise, where this document refers to technologies that would be apparent or known to one of ordinary skill in the art, such technologies encompass those apparent or known to the skilled artisan now or at any time in the future.

The presence of broadening words and phrases such as "one or more," "at least," "but not limited to" or other like phrases in some instances shall not be read to mean that the narrower case is intended or required in instances where such broadening phrases may be absent. The use of the term "component" does not imply that the components or functionality described or claimed as part of the component are all configured in a common package. Indeed, any or all of the various components of a component, whether control logic or other components, can be combined in a single package or separately maintained and can further be distributed in multiple groupings or packages or across multiple locations.

Additionally, the various embodiments set forth herein are described in terms of exemplary block diagrams, flow charts, and other illustrations. As will become apparent to one of ordinary skill in the art after reading this document, the illustrated embodiments and their various alternatives can be implemented without confinement to the illustrated examples. For example, block diagrams and their accompanying description should not be construed as mandating a particular architecture or configuration.

**Claims**

1. A computer-implemented method for compressing a target video, the method being implemented in a computer system that includes one or more physical computer processors and non-transient electronic storage, comprising:

   obtaining, from the non-transient electronic storage, the target video;
   extracting, with the one or more physical computer processors, one or more frames from the target video, wherein the one or more frames comprise one or more of a key frame and a target frame; and
   generating, with the one or more physical computer processors, an estimated optical flow based on a displacement of pixels between the one or more frames.

2. The computer-implemented method of claim 1, wherein the displacement of pixels is between a key frame and the target frame.

3. The computer-implemented method of claim 1, further comprising:
   applying, with the one or more physical computer processors, the estimated optical flow to a trained optical flow model to generate a refined optical flow, the trained optical flow model having been trained by using optical flow training data, wherein the optical flow training data comprises (i) optical flow data, (ii) a corresponding residual, (iii) a corresponding warped frame, and (iv) a corresponding target frame.

4. The computer-implemented method of claim 1, further comprising:

   generating, with the one or more physical computer processors, a warped target frame by applying the estimated optical flow to the key frame, wherein the warped target frame comprises a missing element not visible in the key frame;
   identifying, with the one or more physical computer processors, the missing element in the warped target frame using supplemental information;
   synthesizing, with the one or more physical computer processors, the missing element from the warped target frame by applying the warped target frame to a trained interpolation model, the trained interpolation model having been trained using interpolation training data, wherein the interpolation training data comprises (i) a user-defined value and (ii) multiple sets of frames, and wherein a given set of frames comprises a previous training frame, a target training frame, and a subsequent training frame; and
   generating, with the one or more physical computer processors, a synthesized target frame.

5. The computer-implemented method of claim 4, wherein the supplemental information comprises one or more of a mask, the target frame, a given magnitude of a given estimated optical flow for a given object in the warped target frame, and a depth corresponding to the missing element.

6. The computer-implemented method of claim 5, wherein identifying the missing element comprises:

   based on the given magnitude of the given estimated optical flow of the given object, identifying, with the one or more physical computer processors, the given object as a foreground object when the magnitude reaches a threshold value; and
   identifying, with the one or more physical computer processors, the missing element in a background of the warped target frame using the displacement of the foreground object between the one or more frames.

7. The computer-implemented method of claim 5, wherein identifying the missing element comprises:

   based on a change of depth of an object between the one or more frames, identifying, with the one or more physical computer processors, the missing element using the estimated optical flow;
   generating, with the one or more physical computer processors, an element to apply to the missing element; and
   generating, with the one or more physical computer processors, a synthesized target frame.

8. The computer-implemented method of claim 4, wherein the trained optical flow model and the trained interpolation model comprise a convolutional neural network.

9. The computer-implemented method of claim 4, further comprising:

encoding, with the one or more physical computer processors, the synthesized target frame; and

encoding, with the one or more physical computer processors, side information based on the encoded synthesized target frame, wherein the side information comprises one or more of the optical flow and a mask.

10. A system comprising:

non-transient electronic storage; and
one or more physical computer processors configured by machine-readable instructions to:

obtain, from the non-transient electronic storage, the target video;
extract, with the one or more physical computer processors, one or more frames from the target video, wherein the one or more frames comprise one or more of a key frame and a target frame; and
generate, with the one or more physical computer processors, an estimated optical flow based on a displacement of pixels between the one or more frames.

11. The system of claim 10, wherein the one or more physical computer processors are further configured by machine-readable instructions to:
apply, with the one or more physical computer processors, the estimated optical flow to a trained optical flow model to generate a refined optical flow, the trained optical flow model having been trained by using optical flow training data, wherein the optical flow training data comprises (i) optical flow data, (ii) a corresponding residual, (iii) a corresponding warped frame, and (iv) a corresponding target frame.

12. The system of claim 10, wherein the one or more physical computer processors are further configured by machine-readable instructions to:

generate, with the one or more physical computer processors, a warped target frame by applying the estimated optical flow to the key frame, wherein the warped target frame comprises a missing element not visible in the key frame;
identify, with the one or more physical computer processors, the missing element in the warped target frame using supplemental information;
synthesize, with the one or more physical computer processors, the missing element from the warped target frame by applying the warped target frame to a trained interpolation model, the trained interpolation model having been trained using interpolation training data, wherein the interpolation training data comprises (i) a user-defined value and (ii) multiple sets of frames, and wherein a given set of frames comprises a previous training frame, a target training frame, and a subsequent training frame; and
generate, with the one or more physical computer processors, a synthesized target frame.

13. The system of claim 12, wherein the supplemental information comprises one or more of a mask, the target frame, a given magnitude of a given estimated optical flow for a given object in the warped target frame, and a depth corresponding to the missing element.

14. The system of claim 12, wherein identifying the missing element comprises:

based on the given magnitude of the given estimated optical flow of the given object, identifying, with the one or more physical computer processors, the given object as a foreground object when the magnitude reaches a threshold value; and
identifying, with the one or more physical computer processors, the missing element in a background of the warped target frame using the displacement of the foreground object between the one or more frames.

15. The system of claim 12, wherein identifying the missing element comprises:

based on a change of depth of an object between the one or more frames, identifying, with the one or more physical computer processors, the missing element using the estimated optical flow;
generating, with the one or more physical computer processors, an element to apply to the missing element; and
generating, with the one or more physical computer processors, a synthesized target frame.

16. The system of claim 12, wherein the trained optical flow model and the trained interpolation model comprise a convolutional neural network.

**17.** The system of claim 12, wherein the one or more physical computer processors are further configured by machine-readable instructions to:

encode, with the one or more physical computer processors, the synthesized target frame; and
encode, with the one or more physical computer processors, side information based on the encoded synthesized target frame, wherein the side information comprises one or more of the optical flow and a mask.

**18.** The system of claim 10, wherein the key frame comprises one or more of a previous frame and a subsequent frame.

**19.** The system of claim 10, wherein generating the estimated optical flow comprises using, with the one or more physical computer processors, the previous frame and the target frame.

**20.** A non-transitory computer-readable medium having executable instructions stored thereon that, when executed by one or more physical computer processors, cause the one or more physical computer processors to perform operations of:

obtaining the target video;
extracting one or more frames from the target video, wherein the one or more frames comprise one or more of a key frame and a target frame;
generating an estimated optical flow based on a displacement of pixels between the one or more frames; and
applying the estimated optical flow to a trained optical flow model to generate a refined optical flow, the trained optical flow model having been trained by using optical flow training data, wherein the optical flow training data comprises (i) optical flow data, (ii) a corresponding residual, (iii) a corresponding warped frame, and (iv) a corresponding target frame.

$F_{r_1 \to I}$

$r_1$

$I$

Motion Estimation

**FIG. 1A**

$r_1$

$F_{r_1 \to I}$

Flow Coding

Flow Decoding

**FIG. 1C**

$r_1$

$F_{r_1 \to I}$

Frame Synthesis

$\hat{I}$

**FIG. 1B**

$\hat{I}$

$I$

Image Coding

Image Decoding

**FIG. 1D**

EP 3 703 374 A1

**FIG. 3A**

**FIG. 3B**

Bilinear  Image Based Filtering  Flow Based Filtering

**FIG. 2**

**FIG. 4**

**FIG. 5**

**FIG. 6**

**FIG. 7**

**FIG. 8**

**FIG. 9**

EP 3 703 374 A1

1000

PROCESSOR 1004

MEMORY
1008

STORAGE DEVICES
1010

MEDIA DRIVE
1012

MEDIA
1014

STORAGE UNIT
I/F
1020

STORAGE UNIT
1022

BUS
1002

COMM I/F 1024

CHANNEL 1028

# FIG. 10

Europäisches Patentamt
European Patent Office
Office européen des brevets

# EUROPEAN SEARCH REPORT

Application Number

EP 19 19 1027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAO-YUAN WU ET AL: "Video Compression through Image Interpolation", ARXIV.ORG, CORNELL UNIVERSITY LIBRARY, 201 OLIN LIBRARY CORNELL UNIVERSITY ITHACA, NY 14853, 18 April 2018 (2018-04-18), XP080872238, * pages 5-7, paragraph 4 * | 1,2, 4-10, 12-15 | INV. H04N19/537 H04N19/503 |
| X | ZHE REN ET AL: "Unsupervised Deep Learning for Optical Flow Estimation", PROCEEDINGS OF THE THIRTY-FIRST AAAI CONFERENCE ON ARTIFICIAL INTELLIGENCE, 4 February 2017 (2017-02-04), pages 1495-1501, XP055634669, * page 1497 - page 1498 * | 1-15 | |
| A | SIMON NIKLAUS ET AL: "Context-aware Synthesis for Video Frame Interpolation", ARXIV.ORG, CORNELL UNIVERSITY LIBRARY, 201 OLIN LIBRARY CORNELL UNIVERSITY ITHACA, NY 14853, 29 March 2018 (2018-03-29), XP080860272, * pages 2, 3, paragraph 3 * | 1-15 | TECHNICAL FIELDS SEARCHED (IPC) |
| A | TIANFAN XUE ET AL: "Video Enhancement with Task-Oriented Flow", ARXIV.ORG, CORNELL UNIVERSITY LIBRARY, 201 OLIN LIBRARY CORNELL UNIVERSITY ITHACA, NY 14853, 24 November 2017 (2017-11-24), XP080839996, * pages 4-5, paragraph 4.4 * | 1-15 | H04N |

The present search report has been drawn up for all claims

| Place of search | Date of completion of the search | Examiner |
|---|---|---|
| Munich | 23 July 2020 | Di Cagno, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62717470
- US 254475